# EUROPEAN PATENT SPECIFICATION

(11) **EP 3 995 373 B1**
(45) Date of publication and mention of the grant of the patent: **08.01.2025**
(21) Application number: 20206560.3
(22) Date of filing: 09.11.2020
(51) Int. Cl.: B60T 17/00, B01D 53/26

(54) **AIR DRYER WITH DIRECT SOLENOID CONTROL**
LUFTTROCKNER MIT DIREKTER MAGNETVENTILSTEUERUNG
APPAREIL DE DESSICCATION D'AIR À COMMANDE DIRECTE PAR SOLÉNOÏDE

(43) Date of publication of application: 11.05.2022
(73) Proprietor: KNORR-BREMSE Systeme für Nutzfahrzeuge GmbH, 80809 München (DE)
(72) Inventor: Kadar, David Benjamin, H-6000 Kecskemet (HU); Nagy, Istvan Geza, 6044 Kecskemet (HU); Ratatics, Gábor, 6034 Helvecia (HU)
(74) Representative: DTS Patent- und Rechtsanwälte PartmbB

(56) References cited:
- EP-A1- 2 743 103
- EP-B2- 0 808 756
- DE-A1- 102007 011 256
- DE-A1- 102008 017 361
- DE-A1- 102013 007 086
- DE-A1- 3 139 682
- DE-B4- 102005 057 003
- US-A1- 2019 291 707

## Description

The present invention relates to an air dryer and a method for operating an air dryer unit.

In utility vehicles, pneumatic systems are usually used for brake, suspension and other auxiliary systems. The necessary compressed air is delivered by a reciprocating compressor, and an air supply system is equipped with an air dryer unit, which serves to decrease the water content of the air delivered by the compressor.

Typical air dryer units use a desiccant to absorb the humidity. The desiccant cartridge of the air dryer needs to be regenerated after filling phase. During regeneration, a backward flow of dried air is led through the desiccant. Valves are used to control the regeneration process and to exhaust the air to the atmosphere.

EP 2 743 103 A1 describes a system for providing compressed air, wherein an exhaust line is provided with a solenoid valve. DE 10 2007 011 256 A1 describes a system, wherein an electrically controllable valve controls a pneumatically controlled valve for directing air towards the air dryer cartridge. Furthermore, DE 10 2008 017 361 A1, US 2019 / 291 707 A1, and DE 10 2013 007 086 A1 describe systems for providing pressurized air. DE 31 39 682 A1 discloses an air dryer unit with an exhaust valve which is electromechanically operated.

In current applications, the regeneration is realized by an exhaust valve, which is pneumatically controlled by a pilot valve. With such a setup, the large volume flow of compressed air, which is typically provided, can be efficiently directed by switching the exhaust valve.

Due to the spreading use of electric drive solutions, typical modern compressors deliver less air than the widespread systems according to the state of the art. Also, it is expected for future that electric brake systems will appear, which will work without compressed air. For example, electric vehicles demand lower air volumes for a service brake due to regenerative braking. Also, off-engine compressor solutions can be used with lower volumetric flow. As a consequence, the necessary air volume in the utility vehicle system is assumed to decrease.

It is expected that modern vehicles will use a friction brake increasingly only for emergency cases. Instead, electromechanical brakes are introduced, which will eliminate or at least reduce the air demand in service brake lines significantly.

However, suspension and trailer brake systems may still operate with compressed air.

In addition to that, particularly compact, small air treatment modules are needed in electric vehicles due to the large space required by the battery package.

Furthermore, currently used air dryer solutions include many components and different units for every function. Therefore, current air dryers are complicated, heavy and large.

Thus, it is the problem of the invention to improve an air dryer unit advantageously, in particular with respect to cost efficiency, ease of construction, lower complexity and lower need for assembly space.

According to the invention, this problem is solved by an air dryer unit for a utility vehicle according to claim 1.

According to this, the air dryer unit comprises a desiccant unit, which is arranged downstream from a compressed air inlet and upstream from a compressed air outlet, and an exhaust valve, which is arranged between the compressed air inlet and the desiccant unit. Therein, the exhaust valve is connected to a main exhaust. Also, the exhaust valve is electromechanically operated.

The invention is based on the basic idea to control the exhaust valve of the system for regeneration directly, instead of controlling it indirectly via a pilot valve. The exhaust valve is therefore configured as an electrically controlled valve, in particular a solenoid valve, instead of a pneumatically controlled valve. Thus, a direct control is used to control the airflow through the air dryer, either in a direction from the compressor to the vehicle's compressed air system, or in the opposite direction from the compressed air system to an exhaust.

Thus, the filling and exhausting of the compressed air system can be realized through an electromechanically operated valve, such as a solenoid valve, which controls the regeneration of the air dryer directly, without an additional pilot valve. In particular, the exhaust valve may be situated in a mainstream line of the system, such that both the filling of the system and the exhausting or regeneration of the air dryer unit are realized directly through the exhaust valve. With such a solution, the number of functional units as well as the overall weight and the size of the air dryer unit can be reduced significantly. Also, the resulting air dryer unit has a lower complexity. It is therefore more robust, cost-efficient and easier to manufacture. Also, an air dryer unit with lower space requirements is provided.

Also, the air dryer unit of the invention is optimized for utility vehicles with low air-demand, such as electric vehicle solutions.

In addition to that, the air dryer unit of the invention can be fixed directly onto the compressor, which provides compressed air.

In particular, the compressed air inlet may be configured for receiving compressed air from a compressor unit, in particular from a compressor.

Also, the compressed air outlet may be configured for providing compressed air to a unit of the vehicle or a unit that is connected to the vehicle, such as a trailer. In particular, compressed air is provided to a consumer unit.

In an embodiment, the main exhaust may be configured for releasing compressed air from the air dryer unit to an atmosphere surrounding the air dryer unit.

Also, the main exhaust may be configured for de-aerating a pneumatic system that is connected to the air dryer unit.

In particular, the desiccant unit may be configured following known principles of a unit comprising a desiccant material, which dries the air flowing from the compressed air inlet towards the pneumatic system of the vehicle and/or connected external systems. The moist incoming air flowing through the desiccant - in particular during a filling phase of the system - deposits humidity in the desiccant material. Also, contaminations and in particular particles in the compressed air can be deposited in the desiccant material of the desiccant unit.

In particular, a desiccant cartridge can be used for the desiccant unit.

On the other hand, dry air may be used to regenerate the desiccant material, when it has absorbed a certain amount of humidity: Dry air from the pneumatic system is direct backwards towards and through the desiccant unit, and released through the main exhaust. In this regeneration phase, humidity is released from the desiccant material and into the atmosphere surrounding the exhaust.

In an embodiment of the air dryer unit, a main check valve is arranged between the desiccant unit and the compressed air outlet. Also, a throttle is arranged in parallel to the main check valve in a bypass air duct. In particular, the throttle may be configured as a nozzle or a similar element.

In this configuration, the system is advantageously protected from an overly large airflow in a direction from the pneumatic system towards the desiccant unit and the compressed air inlet.

In a further embodiment, the air dryer unit has two operational states, namely a filling state and a regeneration state, wherein in the filling state the exhaust valve connects the desiccant unit to the compressed air inlet, and in the regeneration state the exhaust valve connects the desiccant unit to the main exhaust.

In this case, the phases for filling and regeneration are advantageously easily defined by the state of the exhaust valve: If a connection is provided from the compressed air inlet towards the desiccant unit, air flows through the desiccant unit towards the pneumatic system of the vehicle and/or other connected systems. On the other hand, if a connection is provided between the desiccant unit and the main exhaust, air is flowing from the pneumatic system towards the exhaust, thus regenerating the desiccant unit.

In particular, the exhaust valve may be configured with two states, namely one state in which the connection from the compressed air inlet towards the desiccant unit is provided, thus defining the filling state, and another state, in which the connection from the desiccant unit to the main exhaust is provided, thus defining the regeneration state of the air dryer unit.

In another embodiment, the air dryer unit further comprises a control unit, which is configured to output an electrical control signal, for directly controlling the exhaust valve.

Thus, the air dryer unit can be operated without the need for further element, such as an additional pilot valve.

In particular, "directly controlling the exhaust valve" may be understood as a control without using a pilot valve. In common systems, a pilot valve, such as a relay valve, is pneumatically connected to a control input of the exhaust valve. In this case, while the pilot valve is electrically controlled and outputs a pneumatic control pressure or pneumatic control signal, the exhaust valve is pneumatically controlled and this subject to an indirect control via the pilot valve.

In particular, the control unit is configured to activate the filling state or the regeneration state of the air dryer unit by controlling the exhaust valve.

In an embodiment, the exhaust valve is a solenoid valve. Thus, the exhaust valve may be configured easily and in a very robust way to control the states of the air dryer unit and have efficient transition between filling and regeneration.

In further embodiment, the exhaust valve may have different types of electromechanically operated valves.

In another embodiment, the exhaust valve is a 3/2-way valve. This gives advantageously easy possibilities to provide the connections as described above. In particular, a solenoid 3/2-way valve may be used, for example a 3/2-way normally open solenoid valve.

In other embodiments, the exhaust valve may be differently configured as another type of valve. For example, 3/2- or 3/3-way valves can be used.

Also, the exhaust valve may be of a normally opened or normally closed type. According to the invention, the air dryer unit further comprises a secondary check valve, which is arranged upstream from the desiccant unit, wherein the secondary check valve is configured to prevent an air back-flow to the compressed air inlet.

In particular, the secondary check valve unit is arranged between the compressed air inlet of the air dryer unit and the exhaust valve. Also, the secondary check valve may be arranged in a connecting line from a compressor, which provides the compressed air to the air dryer unit, before the compressed air reaches the desiccant unit.

In another embodiment, the exhaust valve is not controlled by another valve, in particular not by a pilot valve. Thus, the air dryer unit is advantageously realized with fewer components and thus lighter and more robust than common configurations, which use a pilot valve.

The method for operating an air dryer unit according to claim 8 comprises receiving a control signal and, depending on the control signal, activating a filling state or a regeneration state of the air dryer unit. Herein, when the filling state is activated, an exhaust valve is controlled to connect a desiccant unit to a compressed air inlet. Furthermore, when the regeneration state is activated, the exhaust valve is controlled to connect the desiccant unit to a main exhaust. Herein, the control signal is an electrical signal and the exhaust valve is controlled electromechanically.

The method is in particular configured to operate the air dryer unit according to the present description and/or according to the present claims. Thus, the method has the same advantages as the air dryer unit according to the invention.

In particular, the control signal is an electrical control signal.

The control signal may be generated by a control unit of the air dryer unit and/or by an external control unit.

In particular, the control signal is received by the exhaust valve. The exhaust valve may then be configured to switch between a first state, in particular a filling state, in which the desiccant unit is connected to a compressed air inlet, and a second state, in particular a regeneration state, where the desiccant unit is connected to a main exhaust.

Further details and features of the present invention and its embodiments shall now be described and explained in the figures.

It is shown in:
**Fig. 1** an embodiment of the air dryer unit according to the present invention in a schematical overview;
**Fig. 2** another embodiment of the air dryer unit of the present invention in a schematical overview.

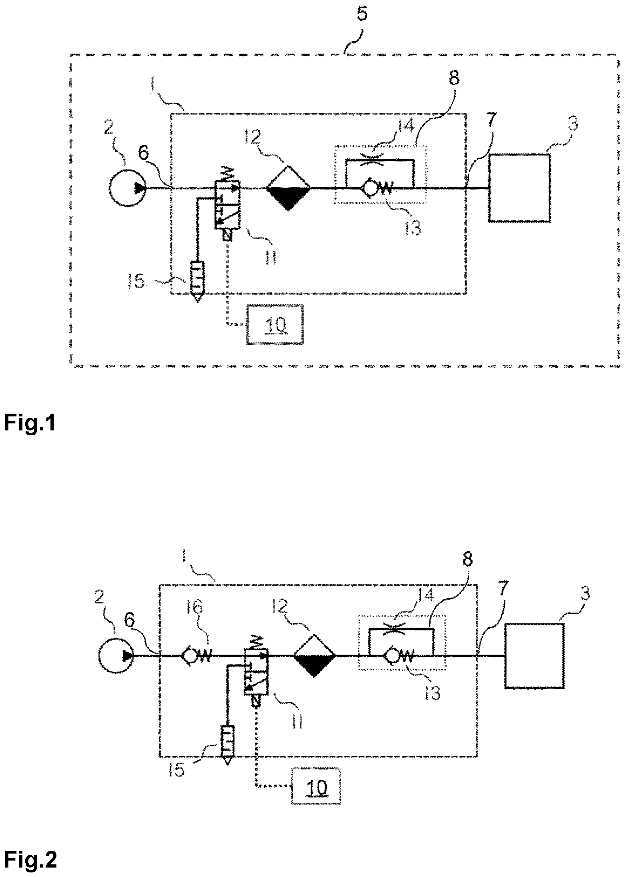

Turning to **Fig. 1****,** an embodiment of the air dryer unit is described.

In the embodiment, the air dryer system 1 is integrated into a utility vehicle 5.

The air dryer unit 1 has a housing.

The air dryer unit 1 has at least one compressed air inlet 6, in particular an inlet port.

Also, the air dryer unit 1 has at least one compressed air outlet 7, in particular an outlet port.

The air dryer unit 1 also has a main exhaust 15, in particular a main exhaust port.

The air dryer unit 1 further has an exhaust valve 11.

The exhaust valve 11 is a solenoid valve.

In particular, the exhaust valve 11 is configured as a 3/2-way valve.

In further embodiments, the exhaust valve 11 can be another type of electromechanically operated valve.

Furthermore, the air dryer unit 1 has a desiccant unit 12.

Also, the air dryer unit 1 has a main check valve 13.

In addition to that, the air dryer unit 1 has a nozzle 14 or throttle 14.

In one embodiment, the nozzle 14 can be integrated into the main check valve 13. Furthermore, the main check valve 13 and the nozzle 14 can be incorporated into a common unit, e.g., within one common housing.

The air dryer unit 1 is connected to a compressor 2.

The compressor 2 is connected at the compressed air inlet 6.

In particular, a delivery line of the compressor 2 is connected to the compressed air inlet 6 directly with a flange or indirectly with a suitable piping.

Also, the compressed air outlet 7 is connected to a compressed air system 3.

The compressed air system 3 is integrated into the utility vehicle 5 and supplies different consumer systems with compressed air, such at the vehicle's brakes, a suspension and/or an auxiliary air system.

Also, the compressed air system 3 can provide compressed air to connected external systems, such as an air system of a trailer.

In the air dryer unit 1, the compressed air inlet 6 is connected with the desiccant unit 12.

The desiccant unit 12 is provided with a desiccant material, which takes up humidity from air, which is flowing through the desiccant unit 12. In particular, moisture is removed from compressed air, as it is provided by the compressor 2 and received through the compressed air inlet 6.

In further embodiments, the desiccant unit 12 can have a desiccant cartridge.

Downstream from the desiccant 12, a main check valve 13 is arranged.

Further downstream, the compressed air outlet 7 is provided, where the compressed air system 3 is connected.

Thus, in a filling state of the system, compressed air is provided by the compressor 2, enters the air dryer unit 1 through the compressed air inlet 6, passes the desiccant unit 12, passes the main check valve 13 and reaches the compressed air system 3 through the compressed air outlet 7.

The main check valve 13 ensures that air can only pass in a direction from the compressed air inlet 6 to the compressed air outlet 7.

Furthermore, the nozzle 14 is provided in a bypass line 8 in this embodiment.

The bypass line is configured to bypass the main check valve 13, i.e., it is connected upstream the main check valve 13 at one end and downstream the main check valve 13 at the other end.

By providing the bypass line 8 with the nozzle 14, a limited airflow can be allowed without passing the main check valve 13. In particular, a limited airflow from the compressed air outlet 7 to the desiccant unit 12 is possible.

The invention is based on the idea that different operational states of the air dryer unit 1 can be activated and an airflow within the air dryer unit 1 can be re-directed by switching an electrically controlled valve, instead of controlling a pilot valve or relay valve, which then provides a pneumatic control signal to another valve in order to change the air flow in the air dryer unit 1. Thus, no pilot valve is used to control the exhaust valve 11. Instead, an electrical control signal can directly switch the exhaust valve 11 and activate the different operational states of the air dryer unit 1, in particular a filling state and a regeneration state.

This has the advantages that the system has fewer components, is lighter and smaller, and can be made more cost-efficient.

The exhaust valve 11 is connected to the compressed air inlet 6, the desiccant unit 12 and the main exhaust 15.

The control input of the exhaust valve is electrically connected to the control unit 10.

In one position, in particular the resting position of the exhaust valve 11, it pneumatically connects the compressed air inlet 6 with the desiccant unit 12.

In another position, in particular when the exhaust valve 11 is electrically activated, it pneumatically connects the main exhaust 15 with the desiccant unit 12.

In the embodiment, a filling state and a regeneration state can be activated for the air dryer unit 1.

In particular, the filling state and the regeneration state are operational states of the air dryer unit 1.

The operational states are activated and/or switched by the control unit 10, which is configured to generate an electrical control signal and apply it to the exhaust valve's 11 control input.

In the case, which is shown in Fig. 1, the fill state is activated.

In this case, the exhaust valve 11 is in its resting position, i.e., it connects the compressed air inlet 6 to the desiccant unit 12.

When the compressor 2 provides compressed air, airflow is generated from the compressed air inlet 6 through the exhaust valve 11 to the desiccant unit 12.

Since compressed air is provided from the side of the desiccant unit 12, the airflow can pass the main check valve 13 and reaches the compressed air system 3 via the compressed air outlet 7.

The compressed air system 3 is thus filled with compressed air.

When the control unit 10 generates a control signal to activate the regeneration state, the exhaust valve 11 is controlled such that it switches its position and connects the desiccant unit 12 to the main exhaust 15.

Activation of the regeneration state can be triggered in different ways: For example, the regeneration state can be activated after a given time, where the air dryer unit 1 is operated in the filling state, depending on the volume of compressed air passing the desiccant unit 12 or depending on a humidity of the compressed air that is provided to the compressed air system 3.

The connection between the desiccant unit 12 and the main exhaust 15 leads to a deaeration of the desiccant unit 12 and connected elements.

In the regeneration state, the main check valve 13 prevents airflow back from the compressed air system 3 to the desiccant 12, but the nozzle 14 allows a certain amount of such airflow through the bypass line 8.

The control unit 10 may also provide a control signal to stop the compressor 2, when the regeneration state is activated. In particular, this control system form the compressor 2 can be an electrical signal.

At the end of the regeneration state, the control unit 10 generates a signal to activate the filling state again, and the exhaust valve 11 is controlled to switch again and connect the desiccant unit 12 to the compressed air inlet 6.

The end of the regeneration state and/or the transition to the filling state can be triggered in different ways: For example, the regeneration state can be ended after a given time, where the air dryer unit 1 is operated in the regeneration state, depending on the volume of compressed air passing the desiccant unit 12 and leaving through the main exhaust 15.

Turning to **Fig. 2****,** another embodiment of the air dryer unit 1 is described. This embodiment is structurally very similar to the embodiment described with relation to Fig. 1. Wherefore, the same reference numerals have been used and the embodiment of Fig. 1 is explained in further detail by this embodiment.

In the case of Fig. 2, the air dryer unit 1 has a secondary check valve 16 arranged upstream from the exhaust valve 11, i.e. arranged between the compressed air inlet 6 and the exhaust valve 11.

When the filling state of the air dryer unit 1 is activated, pressurized air from the compressor 2 may pass the secondary check valve 16 and reach the desiccant unit 12 via the exhaust valve 11.

The dried air then passes the main check valve 13 and is delivered to the compressed air system 3 through the compressed air outlet 7.

When the system pressure reaches a certain level, the compressor 2 stops the air delivery, and the air dryer unit stays in a stand-by phase.

Therein, the secondary check valve 16 prevents a backflow from the compressed air system 3 towards the compressor 2.

The vehicle brake, a suspension system and auxiliary compressed air system can consume the pressurized air prepared by the air dryer unit 1 and provided to the compressed air system 3.

If the system pressure drops below a certain level, the compressor 2 switches back to the filling phase, i.e., the compressor 2 pumps again pressurized air through the compressed air inlet 6.

When desiccant material in the desiccant unit 12 should be regenerated, the position of the solenoid exhaust valve 11 is switched: The connection to the inlet line towards the compressed air inlet 6 is closed, and a connection from the desiccant unit 12 to the main exhaust 15 is opened.

The dried air from downstream the desiccant unit 12 flows back from the compressed air system 3, expands on a regeneration nozzle 14, and cleans the desiccant unit 12 from the moisture and contamination.

The regeneration air exits to the atmosphere at the main exhaust port 15.

### REFERENCE NUMERALS

- 1: Air dryer unit
- 2: Com pressor
- 3: Compressed air system
- 5: Utility vehicle
- 6: Compressed air inlet
- 7: Compressed air outlet
- 8: Bypass line
- 10: Control unit
- 11: Exhaust valve
- 12: Desiccant unit
- 13: Main check valve
- 14: Throttle; nozzle
- 15: Main exhaust
- 16: Secondary check valve

## Claims

1. Air dryer unit (1) for a utility vehicle (5), the utility vehicle (5) having an off-engine compressor, the air dryer unit (1) being connectable to the off-engine compressor, wherein the air dryer unit (1) comprises a desiccant unit (12), which is arranged downstream from a compressed air inlet (6) and upstream from a compressed air outlet (7); and an exhaust valve (11), which is arranged between the compressed air inlet (6) and the desiccant unit (12); wherein the exhaust valve (11) is connected to a main exhaust (15); wherein the exhaust valve (11) is electromechanically operated, **characterized in that** the air dryer unit (1) further comprises a secondary check valve (16), which is arranged upstream from the desiccant unit (12), wherein the secondary check valve (16) is configured to prevent an air back-flow to the compressed air inlet.

2. Air dryer unit (1) according to claim 1,
**characterized in that**
a main check valve (13) is arranged between the desiccant unit (12) and the compressed air outlet (7), and a throttle (14) is arranged in parallel to the main check valve (13) in a bypass air duct (8).

3. Air dryer unit (1) according to claim 1 or 2,
**characterized in that**
the air dryer unit (1) has two operational states, namely a filling state and a regeneration state, wherein in the filling state the exhaust valve (11) connects the desiccant unit (12) to the compressed air inlet (6), and in the regeneration state the exhaust valve (11) connects the desiccant unit (12) to the main exhaust (15).

4. Air dryer unit (1) according to one of the preceding claims,
**characterized in that**
the air dryer unit (1) further comprises a control unit (10), which is configured to output an electrical control signal, for directly controlling the exhaust valve (11).

5. Air dryer unit (1) according to one of the preceding claims,
**characterized in that**
the exhaust valve (11) is a solenoid valve.

6. Air dryer unit (1) according to one of the preceding claims,
**characterized in that**
the exhaust valve (11) is a 3/2-way valve.

7. Air dryer (1) unit according to one of the preceding claims,
**characterized in that**
the exhaust valve (11) is not controlled by another valve, in particular not by a pilot valve.

8. Method for operating an air dryer unit (1) according to one of the preceding claims, wherein a control signal is received; and, depending on the control signal, a filling state or a regeneration state of the air dryer unit (1) is activated; wherein, when the filling state is activated, an exhaust valve (11) is controlled to connect a desiccant unit (12) to a compressed air inlet (6); and, when the regeneration state is activated, the exhaust valve (11) is controlled to connect the desiccant unit (12) to a main exhaust (15); wherein the control signal is an electrical signal and the exhaust valve (11) is controlled electromechanically.

## Patentansprüche

1. Lufttrocknereinheit (1) für ein Nutzfahrzeug (5), wobei das Nutzfahrzeug (5) einen motorunabhängigen Kompressor aufweist, wobei die Lufttrocknereinheit (1) mit dem motorunabhängigen Kompressor verbunden werden kann, wobei die Lufttrocknereinheit (1) eine Trockenmitteleinheit (12) umfasst, die stromabwärts eines Drucklufteinlasses (6) und stromaufwärts eines Druckluftauslasses (7) eingerichtet ist; und ein Auslassventil (11), das zwischen dem Drucklufteinlass (6) und der Trockenmitteleinheit (12) eingerichtet ist; wobei das Auslassventil (11) mit einem Hauptauslass (15) verbunden ist; wobei das Auslassventil (11) elektromechanisch betätigt wird,
**dadurch gekennzeichnet, dass** die Lufttrocknereinheit (1) weiter ein sekundäres Rückschlagventil (16) umfasst, das stromaufwärts der Trockenmitteleinheit (12) eingerichtet ist, wobei das sekundäre Rückschlagventil (16) so konfiguriert ist, dass es einen Luftrückstrom zum Drucklufteinlass verhindert.

2. Lufttrocknereinheit (1) nach Anspruch 1,
**dadurch gekennzeichnet, dass**
zwischen der Trockenmitteleinheit (12) und dem Druckluftauslass (7) ein Hauptrückschlagventil (13) eingerichtet ist, und parallel zum Hauptrückschlagventil (13) in einem Bypassluftkanal (8) eine Drossel (14) eingerichtet ist.

3. Lufttrocknereinheit (1) nach Anspruch 1 oder 2,
**dadurch gekennzeichnet, dass**
die Lufttrocknereinheit (1) zwei Betriebszustände aufweist, nämlich einen Füllzustand und einen Regenerationszustand, wobei im Füllzustand das Auslassventil (11) die Trockenmitteleinheit (12) mit dem Drucklufteinlass (6) verbindet, und im Regenerationszustand das Auslassventil (11) die Trockenmitteleinheit (12) mit dem Hauptauslass (15) verbindet.

4. Lufttrocknereinheit (1) nach einem der vorstehenden Ansprüche,
**dadurch gekennzeichnet, dass**
die Lufttrocknereinheit (1) weiter eine Steuereinheit (10) umfasst, die so konfiguriert ist, dass sie ein elektrisches Steuersignal zum direkten Steuern des Auslassventils (11) ausgibt.

5. Lufttrocknereinheit (1) nach einem der vorstehenden Ansprüche,
**dadurch gekennzeichnet, dass**
das Auslassventil (11) ein Magnetventil ist.

6. Lufttrocknereinheit (1) nach einem der vorstehenden Ansprüche,
**dadurch gekennzeichnet, dass**
das Auslassventil (11) ein 3/2-Wege-Ventil ist.

7. Lufttrocknereinheit (1) nach einem der vorstehenden Ansprüche,
**dadurch gekennzeichnet, dass**
das Auslassventil (11) nicht über ein anderes Ventil, insbesondere nicht über ein Pilotventil, gesteuert wird.

8. Verfahren zum Betreiben einer Lufttrocknereinheit (1) nach einem der vorstehenden Ansprüche, wobei ein Steuersignal empfangen wird; und, abhängig vom Steuersignal, ein Füllzustand oder ein Regenerationszustand der Lufttrocknereinheit (1) aktiviert wird; wobei, wenn der Füllzustand aktiviert ist, ein Auslassventil (11) so gesteuert wird, dass eine Trockenmitteleinheit (12) mit einem Drucklufteinlass (6) verbunden wird; und wenn der Regenerationszustand aktiviert ist, das Auslassventil (11) so gesteuert wird, dass die Trockenmitteleinheit (12) mit einem Hauptauslass (15) verbunden wird; wobei das Steuersignal ein elektrisches Signal ist und das Auslassventil (11) elektromechanisch gesteuert wird.

## Revendications

1. Unité de sécheur d'air (1) pour un véhicule utilitaire (5), le véhicule utilitaire (5) présentant un compresseur hors-moteur, l'unité de sécheur d'air (1) pouvant être raccordée au compresseur hors-moteur, dans laquelle l'unité de sécheur d'air (1) comprend une unité de dessiccante (12), qui est agencée en aval d'une entrée d'air comprimé (6) et en amont d'une sortie d'air comprimé (7) ; et une vanne d'évacuation (11), qui est agencée entre l'entrée d'air comprimé (6) et l'unité dessiccante (12) ; dans laquelle la vanne d'évacuation (11) est raccordée à une évacuation principale (15) ; dans laquelle la vanne d'évacuation (11) est commandée électromécaniquement,
**caractérisée en ce que** l'unité de sécheur d'air (1) comprend en outre une vanne anti-retour secondaire (16), qui est agencée en amont de l'unité de sécheur (12), dans laquelle la vanne anti-retour secondaire (16) est configurée pour empêcher un retour d'air vers l'entrée d'air comprimé.

2. Unité de sécheur d'air (1) selon la revendication 1,
**caractérisée en ce que**
une vanne anti-retour principale (13) est agencée entre l'unité dessiccante (12) et la sortie d'air comprimé (7), et un étranglement (14) est agencé en parallèle à la vanne anti-retour principale (13) dans un conduit d'air de dérivation (8).

3. Unité de sécheur d'air (1) selon la revendication 1 ou 2,
**caractérisée en ce que**
l'unité de sécheur d'air (1) présente deux états de fonctionnement, à savoir un état de remplissage et un état de régénération, dans laquelle, dans l'état de remplissage, la vanne d'évacuation (11) raccorde l'unité dessiccante (12) à l'entrée d'air comprimé (6), et, dans l'état de régénération, la vanne d'évacuation (11) raccorde l'unité dessiccante (12) à l'évacuation principale (15).

4. Unité de sécheur d'air (1) selon l'une des revendications précédentes,
**caractérisée en ce que**
l'unité de sécheur d'air (1) comprend en outre une unité de commande (10), qui est configurée pour délivrer en sortie un signal de commande électrique, pour commander directement la vanne d'évacuation (11).

5. Unité de sécheur d'air (1) selon l'une des revendications précédentes,
**caractérisée en ce que**
la vanne d'évacuation (11) est une vanne électromagnétique.

6. Unité de sécheur d'air (1) selon l'une des revendications précédentes,
**caractérisée en ce que**
la vanne d'évacuation (11) est une vanne à 3/2 voies.

7. Unité de sécheur d'air (1) selon l'une des revendications précédentes,
**caractérisée en ce que**
la vanne d'évacuation (11) n'est pas commandée par une autre vanne, en particulier n'est pas commandée par une vanne pilote.

8. Procédé de fonctionnement d'une unité de sécheur d'air (1) selon l'une des revendications précédentes, dans lequel un signal de commande est reçu ; et, en fonction du signal de commande, un état de remplissage ou un état de régénération de l'unité de sécheur d'air (1) est activé ; dans lequel, lorsque l'état de remplissage est activé, une vanne d'évacuation (11) est commandée pour raccorder une unité dessiccante (12) à une entrée d'air comprimé (6) ; et, lorsque l'état de régénération est activé, la vanne d'évacuation (11) est commandée pour raccorder l'unité dessiccante (12) à une évacuation principale (15) ; dans lequel le signal de commande est un signal électrique et la vanne d'évacuation (11) est commandée électromécaniquement.
